# EUROPEAN PATENT APPLICATION

(11) **EP 4 814 390 A1**
(43) Date of publication of application: **30.09.2026**
(21) Application number: 25166813.3
(22) Date of filing: 27.03.2025
(51) Int. Cl.: F24D 10/00, G05B 23/02

(54) **A METHOD AND SYSTEM FOR DETECTING IRREGULARITIES IN A THERMAL ENERGY EXCHANGE SYSTEM USING A MODEL, AND A METHOD FOR TRAINING THE MODEL**

(71) Applicant: VITO NV, 2400 Mol (BE); Cheddad, Abbas, 371 79 Karlskrona (SE); Alawadi, Sadi, 371 79 Karlskrona (SE); Ghazi, Ahmad Nauman, 371 79 Karlskrona (SE)
(72) Inventor: VAN DREVEN, Jonne, B-2400 Mol (BE); AL KOUSSA, Jad, B-2400 Mol (BE); VANHOUDT, Dirk, B-2400 Mol (BE); CHEDDAD, Abbas, 371 79 Karlskrona (SE); ALAWADI, Sadi, 371 79 Karlskrona (SE); GHAZI, Ahmad Nauman, 371 79 Karlskrona (SE)
(74) Representative: V.O.

(57) **Abstract**

A computer implemented method and system is provided for detecting operational irregularities in a thermal energy exchange system. The system comprises a first side that generates heating/cooling, a second side that consumes heating/cooling, and an interface formed by one or more substations that facilitate thermal energy exchange between the two sides. The method includes obtaining operational data from one or more sensors monitoring a district heating substation over a plurality of time intervals, and utilizing a machine learning model that is pre-trained on mechanical fault signature data to extract features indicative of fault conditions. The model is then fine-tuned with fault-indicative data obtained from the district heating substation to adapt it to the specific operating domain. Subsequently, the fine-tuned machine learning model is applied to feature vectors extracted from the operational data to determine whether the substation and/or any coupled downstream heating/cooling systems are in a faulty or normal operational state, and an indication of a fault is output when a faulty state is detected.

## Description

### FIELD OF THE INVENTION

The invention relates to a method and system for detecting operational irregularities in a thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface, and wherein the interface is provided by means of at least one substation connected to the first side and the second side, the substation being configured to facilitate thermal energy exchange between the first side and the second side, wherein one or more downstream heating/cooling systems at the second side are coupled to the at least one substation. The invention also relates to a district heating system comprising one or more substations and a supervisory control unit. Additionally, the invention relates to a computer-implemented method of training a model for detecting operational irregularities in a thermal energy exchange system.

### BACKGROUND TO THE INVENTION

Thermal energy exchange systems such as district heating (DH) systems have emerged as an important component in modern energy infrastructure, particularly in urban settings. These systems deliver centralized heating and cooling to extensive networks of buildings, enhancing energy efficiency and reducing greenhouse gas emissions. As urban areas strive to meet ambitious sustainability targets and integrate renewable energy sources, the effective operation of DH systems can be important to achieving low-carbon thermal energy delivery on a large scale.

Despite their advantages, DH systems encounter significant challenges that impede optimal performance and reliability. One of the primary challenges is the detection and diagnosis of faults within these systems. Faults such as malfunctioning valves, inaccurate sensors, inadequate control strategies, and suboptimal operation or design can lead to degraded system performance. These issues can cause for example elevated return temperatures, reduced efficiency, and increased energy losses, resulting in substantial resource/financial repercussions and diminished reliability.

As DH networks evolve to future generation systems, such as the Fourth-Generation District Heating (4GDH) systems characterized by lower operational temperatures and enhanced integration with renewable sources, the margin for error becomes increasingly narrow. The complexity of modern DH systems, combined with the diverse range of equipment, network configurations, and consumption patterns, makes monitoring and maintaining these systems more challenging. Conventional fault detection and maintenance approaches, which often rely on periodic audits and manual interventions, incur high costs and operational disruptions.

Furthermore, the current state of the art in Fault Detection and Diagnosis (FDD) for DH systems is hindered by a lack of comprehensive, high-quality labeled fault data. This deficiency complicates the development of robust algorithms capable of detecting faults across varied operational contexts. Traditional fault detection models, often based on linear regression methods or Gaussian assumptions, frequently struggle to perform effectively in real-world scenarios characterized by non-linear dynamics and complex interactions.

The increasing availability of data from smart heat meters offers new opportunities for data-driven FDD and predictive maintenance. However, the lack of (high-frequency) labeled fault data remains a significant barrier to advancing FDD methodologies. Studies have sought to address data collection challenges, yet consistently acquiring labeled data that can accurately describe diverse fault types across different systems remains elusive.

Therefore, the current challenges in FDD for DH systems stem from the complexity of modern networks, insufficient fault data, reliance on manual and costly maintenance practices, and limitations of traditional fault detection models. These issues underscore the urgent need for solutions that can improve fault detection reliability, support the operational efficiency of DH systems, and facilitate their integration into sustainable energy grids.

### SUMMARY OF THE INVENTION

It is an object of the invention to provide for a method and a system that obviates at least one of the above mentioned drawbacks.

Additionally or alternatively, it is an object of the invention to provide for an improved method and system for detecting operational irregularities in a thermal energy exchange system.

Additionally or alternatively, it is an object of the invention to provide a method for fault detection in district heating systems that overcomes the limitations associated with limited labeled fault data.

Additionally or alternatively, it is an object of the invention to enhance system reliability and operational efficiency in district heating systems by providing improved fault detection capability.

Additionally or alternatively, it is an object of the invention to provide a robust fault detection method for district heating systems that generalizes effectively to diverse operational contexts.

Thereto, the invention provides for a computer implemented method for detecting operational irregularities in a thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface, and wherein the interface is provided by means of at least one substation connected to the first side and the second side, the substation being configured to facilitate thermal energy exchange between the first side and the second side, wherein one or more downstream heating/cooling systems at the second side are coupled to the at least one substation, wherein the method includes: obtaining, using one or more sensors, operational data indicative of at least one measured parameter of the district heating substation over a plurality of time intervals; obtaining a machine learning model that has been pre-trained on mechanical fault signature data to extract features characteristic of fault conditions; fine-tuning the trained machine learning model using fault-indicative data obtained from at least one district heating substation, wherein the fine-tuning is configured to adapt the trained machine learning model to the operating domain of district heating; applying the fine-tuned machine learning model to one or more feature vectors extracted from the operational data of the district heating substation to determine whether the district heating substation and/or the one or more downstream heating/cooling systems coupled to the district heating substation are in a faulty operational state or a normal operational state; and outputting an indication of a fault when the one or more feature vectors are classified as faulty by the fine-tuned machine learning model.

The method provides an improved approach for detecting operational irregularities in thermal energy exchange systems by employing a machine learning model that has been pre-trained on mechanical fault signature data. By pre-training the model on data representing fault conditions in mechanical systems, the method leverages learned features characteristic of faults, enabling the model to recognize similar patterns in the thermal energy exchange system. Fine-tuning the pre-trained model using fault-indicative data from district heating substations adapts the model to the specific operational characteristics of district heating, despite limited fault data in this domain. This combination of pre-training and fine-tuning enhances the model's fault detection capabilities, allowing for accurate classification of the substation's operational state. Outputting an indication of a fault when the model identifies faulty conditions ensures timely detection and intervention, thereby improving system reliability and reducing maintenance costs.

In operation, the method involves obtaining operational data indicative of at least one measured parameter of the district heating substation over multiple time intervals. This data is collected using one or more sensors installed within the substation, which may measure parameters such as supply and return temperatures, flow rates, and pressure drops. The data reflects the substation's behavior over time and captures both normal and potential faulty operational states. Additionally or alternatively, the data may come from sensors in one or more downstream systems coupled to the substation.

A machine learning model that has been pre-trained on mechanical fault signature data is obtained. The mechanical fault signature data includes time-series sensor measurements capturing the behavior of mechanical systems experiencing faults, such as vibration data from faulty mechanical bearings or similar. By pre-training the model on this data, it extracts features characteristic of fault conditions, learning to recognize patterns associated with operational irregularities.

The pre-trained machine learning model is then fine-tuned using fault-indicative data obtained from at least one district heating substation. This fine-tuning adapts the model to the specific operating domain of district heating, allowing it to capture the unique characteristics of faults within district heating systems. The fine-tuning process leverages the limited available fault data from the district heating substation to adjust the model parameters appropriately.

After fine-tuning, the model is applied to one or more feature vectors extracted from the operational data of the district heating substation. These feature vectors represent processed forms of the collected sensor data, highlighting key aspects of the substation's operational state. The fine-tuned machine learning model analyzes these feature vectors to determine whether the substation and/or the downstream heating systems coupled to it are operating normally or experiencing a fault.

When the feature vectors are classified as faulty by the fine-tuned machine learning model, the method outputs a detection of a fault. This indication can prompt timely detection and intervention, enhancing system reliability and reducing maintenance costs. By leveraging the knowledge gained from mechanical fault signature data and adapting it to the district heating domain, the method improves fault detection capabilities despite the scarcity of labeled fault data in district heating systems.

This approach addresses the challenges associated with limited fault data in district heating by utilizing transfer learning. By pre-training on abundant mechanical fault data and fine-tuning with specific district heating substation data, the machine learning model becomes adept at identifying operational irregularities in thermal energy exchange systems. The method enables accurate classification of the substation's operational state, facilitating efficient maintenance and operation of district heating networks.

Optionally, including preprocessing the operational data of the district heating substation so as to generate one or more fault signatures that increase fault-like variability, said preprocessing comprising at least: dividing or segmenting the operational data into multiple time-based intervals, normalizing or standardizing the data within each interval to reduce magnitude disparities, aligning the time-based data across said intervals to account for timing shifts, and generating a differenced time-series representation to increase dynamic changes between consecutive time steps; and wherein the fine-tuned machine learning model is applied to the generated fault signatures to determine whether the district heating substation is in a faulty operational state or a normal operational state a detection of a fault is outputted in case said fault signatures are classified as faulty by the fine-tuned machine learning model.

The detection of faults in a district heating substation can be improved by incorporating a preprocessing step that generates fault signatures with increased fault-like variability. This preprocessing step serves to improve the sensitivity of a fine-tuned machine learning model to anomalies within the operational data of the substation. The method begins by dividing or segmenting the operational data into multiple time-based intervals, such as daily periods. This segmentation captures temporal patterns and cyclical behaviors inherent in the substation's operation, which are important for identifying deviations that may indicate faults.

Within each time-based interval, the operational data is normalized or standardized. This process reduces magnitude disparities across different intervals, allowing for a consistent comparison of the data. By normalizing the data, variations due to external factors unrelated to faults are minimized, and the focus is placed on the intrinsic behavior of the system. This facilitates the detection of anomalies that deviate from the normal operational patterns.

To account for timing shifts and synchronization issues that may occur in the data collection process, the time-based data across the intervals is aligned. This alignment ensures that similar events in different intervals are properly synchronized, allowing for accurate pattern recognition. Techniques such as dynamic time warping may be employed to align the data effectively, compensating for any temporal discrepancies.

After alignment, in some examples an average pattern is derived from the aligned data - this captures a representative daily or periodic signature by smoothing out noise and minor variations. Once this average pattern is obtained, a differenced time-series representation is generated by calculating the differences between consecutive time steps within the averaged data. This differencing amplifies dynamic changes and highlights the variability between successive data points. By emphasizing these dynamic changes, the method accentuates features that are indicative of faults, such as sudden fluctuations or irregular patterns that deviate from normal behavior.

The generated fault signatures, which encapsulate the enhanced fault-like variability, are then provided as input to the fine-tuned machine learning model. The machine learning model, previously fine-tuned using fault-indicative data from at least one district heating substation, is configured to analyze the fault signatures and determine whether the substation is in a faulty operational state or a normal operational state. By applying the model to these enhanced fault signatures, detection accuracy is improved, as the model can more effectively identify features most relevant to fault conditions.

Optionally, the mechanical fault signature data includes time-series sensor measurement data that captures a behavior of mechanical systems experiencing faults.

Mechanical fault data, such as that obtained from faulty mechanical bearings, provide rich patterns of fault-induced variability through detailed time-series measurements. These measurements often include dynamic changes indicative of emerging faults, such as irregular vibrations or fluctuations in operational parameters, which are characteristic of mechanical systems under fault conditions.

By obtaining a machine learning model pre-trained on this mechanical fault signature data, the method utilizes the inherent knowledge embedded within the time-series sensor measurements. The pre-trained model learns to recognize features characteristic of mechanical faults, such as patterns of irregular vibrations or dynamic shifts in sensor readings. This learned expertise is valuable because faults in mechanical systems manifest through behaviors that can be quantitatively captured by sensors over time, providing a robust dataset for model training.

Applying the fine-tuned machine learning model to feature vectors extracted from the operational data of a DH substation enables the detection of faulty operational states. The time-series nature of the sensor measurements allows the model to analyze temporal patterns and identify deviations indicative of faults. When the operational data exhibit patterns consistent with fault-induced variability learned from mechanical systems, the model classifies the state as faulty and outputs an indication of a fault.

Optionally, the mechanical fault signature data includes operational measurement data that shows dynamic changes indicative of emerging faults.

In the method for detecting operational irregularities in a thermal energy exchange system, mechanical fault signature data that includes operational measurement data exhibiting dynamic changes indicative of emerging faults is incorporated into the training of a machine learning model. This data encompasses time-series measurements that capture the behavior of mechanical systems as they begin to develop faults, reflecting fluctuations and variations such as vibrations or temperature changes. By training the machine learning model with this operational measurement data, which shows the dynamic progression of fault conditions over time, the model becomes adept at recognizing subtle deviations and trends that may signify the onset of a fault in the district heating substation.

The incorporation of such dynamic operational measurement data allows the model to learn patterns associated with the early stages of mechanical faults. As these emerging faults often manifest through increasing variability or irregular patterns in the data, the model, exposed to these dynamic changes during training, enhances its ability to detect early indicators of potential issues. This exposure equips the model to identify subtle irregularities in the operational data of the district heating substation that may otherwise go unnoticed.

By learning from mechanical fault signature data that includes these dynamic changes, the model's predictive capabilities are strengthened. It becomes proficient not only in distinguishing between normal and faulty operational states but also in understanding the evolving nature of faults as they develop. This comprehensive understanding facilitates early detection and intervention, allowing maintenance personnel to address issues before they escalate into significant failures.

The method's focus on operational measurement data showing dynamic changes indicative of emerging faults leverages the common patterns found in mechanical systems undergoing faults. The dynamic nature of these changes can be important, as they provide early signs of deterioration in system performance. By incorporating this data into the pre-training phase, the machine learning model is better equipped to recognize and respond to early signs of faults.

Optionally, the mechanical fault signature data is obtained from a domain exhibiting periodic or vibration-based fault characteristics.

Mechanical systems such as rotating machinery, including mechanical bearings, often manifest faults through periodic anomalies or irregularities in vibration patterns. These anomalies are captured as time-series data reflecting the dynamic behavior of the system under fault conditions. By leveraging mechanical fault signature data from domains characterized by vibration-based faults, the method capitalizes on the similarities between mechanical systems and thermal energy exchange systems in how faults manifest. In mechanical systems, faults such as bearing defects lead to cyclical anomalies in vibration signals, which are indicative of irregular mechanical interactions or imbalances. Similarly, faults in thermal energy exchange systems, like district heating substations, can result in fluctuations and irregular patterns in operational parameters such as temperature differentials and flow rates. These irregularities may not be identical in nature but share underlying patterns of variance and unpredictability that are characteristic of fault conditions.

The use of mechanical fault signature data from vibration-based domains enhances the relevance and transferability of the features learned during the pre-training of the machine learning model. The learned features encapsulate the essence of fault-induced anomalies, which are valuable in identifying similar patterns in the thermal energy exchange system. This selection of source domain data ensures that the pre-trained model is trained with an understanding of fault characteristics that are pertinent to the target domain.

Upon fine-tuning with fault-indicative data from the thermal energy exchange system, the machine learning model adapts its learned representations to the specific operational context of the district heating substation. The prior exposure to vibration-based fault patterns facilitates a more effective transfer learning process, allowing the model to recognize and detect faults within the thermal energy exchange system with greater accuracy. The alignment of fault characteristics between the mechanical and thermal domains leads to improved generalization and robustness of the fault detection mechanism.

Optionally, the mechanical fault signature data includes vibration data, wherein the vibrational data includes time-series signals from accelerometers or other vibration sensors installed on rotating or moving parts.

To enhance fault detection accuracy in such systems, the method leverages mechanical fault signature data that includes vibration data. This vibration data comprises time-series signals obtained from accelerometers or other vibration sensors installed on rotating or moving parts within mechanical systems.

Mechanical components like bearings exhibit characteristic vibration patterns when faults occur. These patterns manifest as irregularities in the time-series signals captured by the vibration sensors. By pre-training a machine learning model on this rich vibration data, the model learns to recognize intricate fault patterns associated with mechanical anomalies. The vibration data is rich in high-frequency information, capturing subtle nuances of mechanical degradation that are important for accurate fault detection.

When the fine-tuned machine learning model is applied to feature vectors extracted from the operational data of a district heating substation, it utilizes the learned patterns to determine the operational state of the substation. The model analyzes the data for signatures indicative of faults, leveraging its training on vibration data to recognize analogous irregularities. If the model classifies the feature vectors as faulty, it outputs an indication of a fault, enabling timely intervention.

By incorporating mechanical fault signature data that includes time-series signals from accelerometers or other vibration sensors on rotating or moving parts, the method addresses the challenge of limited labeled fault data in district heating systems. The transfer of knowledge from the mechanical domain enriches the model's capability to detect faults accurately in the thermal energy exchange context. This approach enhances the reliability of fault detection, ensuring that operational irregularities in district heating substations are identified promptly and accurately.

Optionally, the mechanical fault signature data is mechanical bearing fault data, wherein the mechanical bearing fault data comprise time-series measurements indicative of mechanical vibration or equivalent fault-related variations in mechanical bearings.

Mechanical bearings are important components in numerous mechanical systems, and their failure modes are well-documented and extensively studied in the field of mechanical engineering. Faults in mechanical bearings manifest through characteristic vibration patterns that are indicative of underlying issues such as wear, misalignment, or degradation. These vibration signals provide rich informational content that captures the dynamic behavior of bearings under fault conditions.

The pre-training enables the model to acquire a foundational understanding of fault-induced variability, which is characterized by increased amplitudes, frequencies, or irregular fluctuations in the vibration signals. The knowledge gained from the mechanical bearing fault data is transferable to the detection of faults in district heating systems. Although the domains differ, the underlying patterns of variability due to faults share similarities. In both mechanical bearings and district heating substations, faults can introduce irregularities and increased variability in the operational data. For instance, in district heating systems, faults may cause fluctuations in temperature differentials or flow rates that resemble the vibration patterns observed in faulty bearings. By leveraging the pre-trained model, which has learned to detect such irregularities, the method enhances the fault detection capabilities within the thermal energy exchange system.

This approach effectively addresses the challenge of limited labeled fault data in district heating systems by utilizing the abundant and well-characterized mechanical bearing fault data for pre-training. The pre-trained model, fine-tuned with available fault-indicative data from district heating substations, becomes adept at identifying operational irregularities despite the scarcity of domain-specific fault data. Consequently, the method improves the reliability and efficiency of fault detection in district heating systems by incorporating transferable knowledge from mechanical bearing faults, thereby enhancing the operational integrity of the thermal energy exchange system.

Optionally, the pre-training is performed using a dataset of bearing vibration signals under multiple bearing fault types.

Mechanical bearing fault data is abundantly available and includes time-series measurements that capture the behavior of mechanical systems experiencing various faults, such as inner race defects, outer race defects, ball defects, etc., and combinations thereof. These faults manifest as distinctive vibration patterns characterized by strong, repeated peaks, irregular oscillations, and abrupt changes in the vibration signals, forming recognizable fault profiles.

By leveraging this diverse dataset, the model is exposed to a wide range of fault conditions inherent in mechanical bearings. The comprehensive training enables the machine learning model to learn generalized features associated with different fault manifestations. Specifically, the model learns to recognize patterns of unpredictable peaks and dips, sudden fluctuations, and other anomalies in the vibration data that are indicative of mechanical faults. This foundational understanding equips the model with the ability to detect fault-related variations in dynamic systems.

When subsequently fine-tuned using fault-indicative data obtained from district heating substations, the model adapts these learned features to the specific operating domain of thermal energy exchange systems. Faults in district heating substations often cause irregularities in operational data, such as sudden changes in temperature differentials, pressure variations, or flow rates. The model's prior exposure to multiple bearing fault types enhances its ability to identify similar patterns of anomalies in the district heating domain. The result is a machine learning model that is adept at identifying a wide array of fault-induced anomalies in district heating substations, including those not specifically encountered during fine-tuning. The exposure to diverse bearing fault types during pre-training enhances the model's robustness and generalization capabilities. Even with limited district heating fault data available for fine-tuning, the pre-trained model has developed a generalized understanding of fault characteristics. This approach effectively addresses the challenge of data scarcity in district heating systems by utilizing extensive mechanical fault signature data for pre-training, leading to more reliable fault detection across different fault types and operational scenarios within district heating networks.

Optionally, the pre-trained machine learning model is an autoencoder configured to learn a compressed representation of mechanical fault patterns said fine-tuning step updates at least the decoder portion of said model based on district heating substation fault-indicative data, so as to capture heating substation domain-specific fault characteristics.

The autoencoder is initially configured to learn a compressed representation of mechanical fault patterns by training on mechanical fault signature data. This data includes patterns associated with mechanical faults in systems such as mechanical bearings, where ample fault data is available. Through this pre-training process, the autoencoder learns important features and structures that characterize fault conditions in mechanical systems.

The autoencoder has an encoder and a decoder network. The encoder transforms input data into a lower-dimensional latent representation, effectively capturing the salient features of mechanical fault patterns. The decoder reconstructs the original input data from this latent space. By minimizing the reconstruction error between the input and the output, the autoencoder becomes proficient in modeling the underlying patterns present in the mechanical fault data.

Subsequent to the pre-training phase, the method involves fine-tuning at least the decoder portion of the autoencoder using fault-indicative data obtained from at least one district heating substation. This fine-tuning process adapts the decoder to capture domain-specific fault characteristics unique to heating substations within the district heating domain. By updating the decoder weights based on the district heating substation fault data while maintaining the encoder weights learned from the mechanical domain, the model integrates the general fault detection capabilities with the specific nuances of faults occurring in district heating systems. It will be appreciated that other fine-tuning techniques may also be used, where one or more other parts of the autoencoder are fine-tuned.

The fine-tuned autoencoder is then applied to operational data collected from the district heating substation. Feature vectors extracted from this operational data serve as input to the autoencoder. The encoder processes these feature vectors using the representations learned from mechanical fault patterns, transforming them into latent representations. The decoder, now adapted to the district heating domain, reconstructs the input data from these latent representations. By evaluating the reconstruction error, defined as the difference between the input data and the reconstructed output, the method determines whether the district heating substation is operating normally or exhibiting a faulty state. A significant reconstruction error indicates that the autoencoder cannot effectively reconstruct the operational data, suggesting that the data represents conditions outside the learned patterns of normal and mechanical fault states, thereby signaling a potential fault specific to the district heating substation.

It will be appreciated that various other machine learning models can be employed instead of the autoencoder.

Optionally, the daily or periodic segmentation of data is chosen to capture cyclical demand profiles of residential or commercial district heating usage.

In embodiments of the present invention, the method for detecting operational irregularities in a thermal energy exchange system involves a preprocessing step that significantly enhances fault detection accuracy. This preprocessing includes dividing or segmenting the operational data of the district heating substation into multiple time-based intervals, such as daily or other periodic segments. The choice of daily or periodic segmentation can be intentionally made to capture the cyclical demand profiles characteristic of residential or commercial district heating usage.

District heating systems exhibit inherent cyclical patterns in thermal energy consumption due to predictable human activities and routines. For instance, residential heating demand typically increases in the early morning as occupants prepare for the day, decreases when residents are away, and rises again in the evening upon their return. Commercial buildings may show demand peaks aligned with business hours and reduced usage during off-hours or weekends.

By aligning the data segmentation with these natural cycles, the method addresses small day-to-day time shifts (e.g., if a particular event happens five minutes later on one day compared to the next). In other words, the alignment step ensures that similar recurring events are synchronized, which helps in creating representative average patterns over daily or weekly intervals. This alignment can be primarily about countering timing offsets. It enables more consistent comparison across intervals, so that any subsequent analysis (e.g., forming an average usage profile) is not skewed by minor shifts in the timing of events.

Segmenting the data into daily or periodic intervals allows for the isolation and analysis of patterns that are representative of standard operational conditions. This segmentation facilitates the identification of deviations from the norm by comparing the operational data across equivalent time frames. By focusing on these intervals, the method can detect anomalies that may signify faults, such as unusual fluctuations in temperature differentials or flow rates that deviate from established patterns.

Furthermore, this approach aids in reducing the impact of external factors that may obscure fault detection. By standardizing or normalizing the data within each segmented interval, magnitude disparities are reduced, emphasizing the intrinsic behavior of the substation independent of absolute values. Aligning the time-based data across intervals accounts for minor timing shifts in the cyclical patterns, ensuring that comparisons are accurate despite slight variations in peak demand times.

The use of daily or periodic segmentation is particularly advantageous because it mirrors the cyclical nature of district heating demand, thus enhancing the machine learning model's ability to distinguish between normal operational variability and true anomalies. This temporal alignment improves the robustness of the fault detection process by reducing false positives that can arise from normal fluctuations within the expected demand cycles.

Optionally, a data acquisition interface is provided that is configured to perform sensor measurements at intervals of thirty minutes or less, preferably twenty minutes or less, even more preferably five minutes or less, for obtaining the operational data.

In order to enhance the detection of operational irregularities in thermal energy exchange systems, particularly in district heating substations, the present invention provides a data acquisition interface configured to perform sensor measurements at intervals of thirty minutes or less, preferably twenty minutes or less, and even more preferably five minutes or less. By increasing the frequency of sensor measurements, the system captures a more detailed and granular representation of the operational data, enabling the monitoring of rapid changes and transient events that may be indicative of emerging faults. Higher-frequency data collection allows for the observation of subtle anomalies in parameters such as supply and return temperatures, flow rates, and pressures, which are important for assessing the performance of the substation.

The enhanced temporal resolution obtained through frequent sensor measurements contributes significantly to the effectiveness of machine learning models used for fault detection. With more data points collected over shorter intervals, the models can more precisely identify deviations from normal operational patterns. This increased granularity in the data enables the early detection of faults by revealing patterns and irregularities that may be missed with less frequent sampling. For instance, abrupt fluctuations in temperature differentials or unexpected changes in flow rates can be promptly identified, allowing for timely corrective actions before minor issues escalate into major failures.

Implementing a data acquisition interface that supports high-frequency measurements ensures that transient events and rapid system dynamics are accurately captured. In practical applications, such as the monitoring of real-world district heating substations, operational data collected at around five-minute intervals (e.g. 1-15 minutes) has proven effective in reflecting the dynamic behavior of the system under various conditions. This level of detail can be important for creating reliable models that can detect faults across different operational contexts, including those that manifest over short time scales.

In some examples, by configuring the data acquisition interface to perform sensor measurements at intervals of thirty minutes or less, the system ensures that no important information is lost between measurements. This approach enhances the overall system reliability and efficiency by facilitating proactive maintenance strategies. Operators can address detected anomalies swiftly, reducing downtime and preventing potential energy losses associated with undetected faults.

Optionally, the fault signature used as model input is derived from a primary return temperature of the district heating substation, and/or a temperature differential (ΔT) between a supply temperature (Ts) and a return temperature (Tr).

The method utilizes fault signatures derived from the primary return temperature (Tr) of the district heating substation and the temperature differential (ΔT) between the supply temperature (Ts) and the return temperature (Tr). By focusing on these specific thermal parameters, the method targets key indicators of the substation's operational efficiency and thermal performance. Variations in the primary return temperature can directly reflect changes in the heat absorption capacity of the downstream heating systems or potential issues within the substation, such as heat exchanger fouling or valve malfunctions. Similarly, fluctuations in the temperature differential (ΔT) provide insights into the effectiveness of the heat transfer process between the primary and secondary sides of the substation.

Analyzing the temperature differential is particularly effective because it captures the net result of the heat exchange process. A decreasing ΔT may indicate that the substation is not effectively transferring heat to the secondary side, possibly due to blockages, leaks, or inefficient control strategies. Conversely, an increasing ΔT beyond expected levels can suggest overloading or other anomalies. By deriving fault signatures from these parameters, the method enhances the sensitivity of the fault detection model to anomalies that significantly impact energy efficiency and system reliability.

The fault signatures are generated by collecting operational data over multiple time intervals, allowing the capture of both steady-state and transient behaviors of the thermal parameters. This data-driven approach enables the detection of subtle changes and patterns that may signify the onset of faults. The method thereby improves fault detection accuracy by concentrating on the most informative parameters related to the thermal energy exchange process.

Optionally, the processor is configured to update the fine-tuned model incrementally as additional labeled or unlabeled district heating data become available.

As new operational data is acquired, the processor adjusts the model parameters to incorporate the latest information, enhancing the model's ability to recognize patterns indicative of normal and faulty operational states. This incremental updating process allows the model to refine its understanding of the system's behavior over time, accommodating evolving demand profiles, equipment wear, or emerging fault types that were not present in the initial training data.

Optionally, comprising a communications interface operable to send identified faults, alerts, or diagnostic data to a remote supervisory control system responsible for scheduling maintenance in the district heating network.

This interface enables the seamless transmission of operational information from the district heating substation to maintenance personnel or systems. By facilitating real-time communication of detected faults and anomalies, the interface allows for immediate awareness of issues affecting the thermal energy exchange system. Minimizing downtime is a significant benefit of this integration. By providing timely notifications, the communications interface helps in swiftly addressing operational irregularities before they escalate into more severe problems. Additionally or alternatively, the inclusion of the communications interface also supports predictive maintenance strategies. By continuously sending diagnostic data, it enables the remote supervisory control system to analyze trends and identify potential issues before they result in failures. This predictive capability reduces the likelihood of unexpected outages and extends the lifespan of system components through timely maintenance actions.

According to an aspect, the invention provides for a detection system for detecting operational irregularities in a thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface, and wherein the interface is provided by means of at least one substation connected to the first side and the second side, the substation being configured to facilitate thermal energy exchange between the first side and the second side, wherein one or more downstream heating/cooling systems at the second side are coupled to the at least one substation, the detection system comprising: one or more sensors configured to obtain operational data indicative of at least one measured parameter of the district heating substation over a plurality of time intervals; a memory storing: a trained machine learning model that has been pre-trained on mechanical fault signature data to extract features characteristic of fault conditions; instructions for fine-tuning the trained machine learning model and classifying operational states of the district heating substation; one or more processors coupled to the memory and the one or more sensors, the one or more processors being configured to: fine-tune the trained machine learning model using fault-indicative data obtained from at least one district heating substation, wherein the fine-tuning is configured to adapt the trained machine learning model to the operating domain of district heating; apply the fine-tuned machine learning model to one or more feature vectors extracted from the operational data obtained by the one or more sensors, in order to determine whether the district heating substation and/or the one or more downstream heating/cooling systems coupled to the district heating substation are in a faulty operational state or a normal operational state; and output an indication of a fault when the one or more feature vectors are classified as faulty by the fine-tuned machine learning model.

According to an aspect, the invention provides for a computer-implemented method of training a machine learning model for detecting operational irregularities in a thermal energy exchange system, the method comprising: obtaining mechanical fault signature data indicative of fault conditions in mechanical systems, wherein the mechanical fault signature data comprise time-series sensor measurements capturing fault-related behaviors; pre-training a machine learning model on the mechanical fault signature data, wherein feature representations associated with mechanical fault patterns are learned; obtaining district heating substation fault-indicative data corresponding to one or more district heating substations in a thermal energy exchange system, wherein each district heating substation is configured to facilitate thermal energy exchange between a first side, where heating or cooling is generated, and a second side, where heating or cooling is consumed; fine-tuning the machine learning model on the district heating substation fault-indicative data, wherein the model's learned representations to operational characteristics of the thermal energy exchange system are adapted. In some examples, the fine-tuned machine learning model can be outputted for subsequent use in detecting e.g. whether the one or more district heating substations are in a faulty operational state or a normal operational state based on operational data obtained from sensors monitoring the thermal energy exchange system.

It will be appreciated that any of the aspects, features and options described in view of the method apply equally to the system and the described district heating system. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of an exemplary system;
Fig. 2 shows a schematic diagram of an embodiment of an exemplary system;
Fig. 3 shows a schematic diagram of an exemplary method;
Fig. 4 shows a schematic illustration of data processing steps;
Fig. 5 shows a schematic diagram of an embodiment of an exemplary autoencoder;
Fig. 6 shows a schematic diagram of an embodiment of graphs; and
Fig. 7 shows a schematic diagram of an embodiment of graphs.

### DETAILED DESCRIPTION

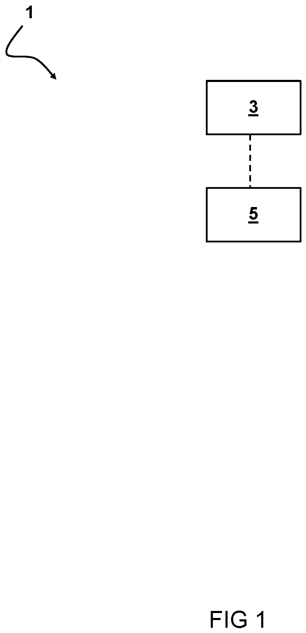

Fig. 1 shows a schematic diagram of an embodiment of an exemplary detection system 1 for detecting operational irregularities in a thermal energy exchange system with a first side, a second side, and an interface via at least one substation connecting them, wherein heating/cooling is generated upstream on the first side and consumed downstream on the second side, and wherein the substation facilitate energy exchange, with one or more downstream heating/cooling systems on the second side coupled to it. The detection system comprises one or more sensors 3 configured to obtain operational data indicative of at least one measured parameter of the district heating substation over a plurality of time intervals. The system 1 may have a memory storing a trained machine learning model that has been pre-trained on mechanical fault signature data to extract features characteristic of fault conditions and fine-tuned for classifying operational states of the district heating substation. The system 1 may also have one or more processors 5 coupled to the memory and the one or more sensors 3, the one or more processors 5 being configured to: apply the fine-tuned machine learning model to one or more feature vectors extracted from the operational data obtained by the one or more sensors, in order to determine whether the district heating substation and/or the one or more downstream heating/cooling systems coupled to the district heating substation are in a faulty operational state or a normal operational state; and output an indication of a fault when the one or more feature vectors are classified as faulty by the fine-tuned machine learning model.

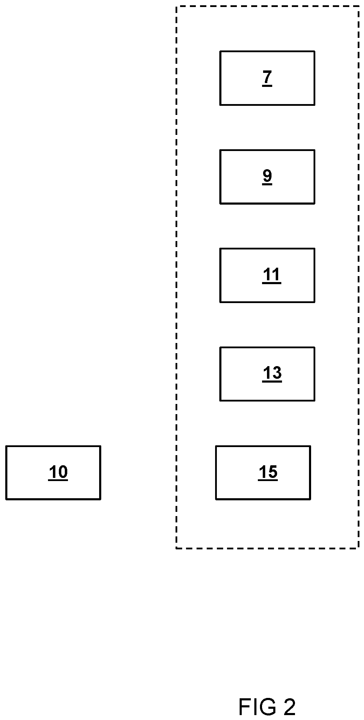

Fig. 2 shows a schematic diagram of an embodiment of an exemplary detection system 1 for detecting operational irregularities in a thermal energy exchange system.

The first side of the thermal energy exchange system is responsible for generating heating or cooling energy. This side is upstream of the interface and typically includes heat generation units such as boilers, heat pumps, and/or solar thermal collectors. These units convert primary energy sources into thermal heating or cooling, which is then transported through e.g. supply pipes towards the interface (e.g. distribution network). The supply pipes carry a heat transfer medium, commonly water or steam, which is heated/cooled to a specific temperature suitable for downstream consumption.

The second side represents the point of thermal energy consumption and is downstream of the interface. It includes various downstream heating/cooling systems such as residential radiators, airconditioning units, commercial heating units, industrial process heaters, etc.. These systems are connected via return pipes that circulate the cooler heat transfer medium back towards the first side after thermal energy has been extracted for end-use applications.

The interface can be provided by at least one substation that connects the first side to the second side. The substation is configured to facilitate thermal energy exchange (heating/cooling) between the upstream generation and downstream consumption sides. It typically includes heat exchangers, control valves, and flow meters that can be used to regulate the transfer of thermal energy while maintaining optimal flow rates and temperatures.

In the shown example in fig. 2, the system has a sensor and data acquisition unit 7. The system 1 may be equipped with a network of sensors positioned within the substation and along the supply and return pipes. These sensors include e.g. temperature sensors, pressure sensors, flow rate sensors, and differential pressure sensors. They may continuously collect operational data indicative of various parameters such as supply temperature (Ts), return temperature (Tr), temperature differential (ΔT), flow rates, and/or pressures over multiple time intervals.

A data processing and preprocessing unit 9 is provided. Operational data collected by the sensors is transmitted to a data processing and preprocessing unit 9. This unit is responsible for organizing the raw sensor data into structured datasets suitable for analysis. In some examples, the preprocessing steps include:
dividing, by means of a segmentation module, the operational data into multiple time-based intervals to capture temporal patterns and cyclic behaviors;
normalizing or standardizing, by means of a normalization module, data within each interval to reduce magnitude disparities and enhance comparability;
aligning, by means of an alignment module, time-based data across intervals to account for timing shifts due to sensor discrepancies or delays; and/or
generating, by means of a differencing module, a differenced time-series representation to amplify dynamic changes between consecutive time steps, thereby increasing fault-like variability in the data.

A machine learning model 11 may be provided for enabling the fault detection mechanism. The model may be obtained by first using a pre-trained model that is initially trained on mechanical fault signature data obtained from domains exhibiting periodic or vibration-based fault characteristics, such as mechanical bearings or rotating machinery. This pre-training allows the model to learn general features characteristic of fault conditions. Subsequently, fine-tuning this pre-trained model using fault-indicative data specific to at least one district heating substation. This adapts the model to the operating domain of district heating, capturing domain-specific fault characteristics.

In some examples, the fine-tuned model is configured as an autoencoder comprising an encoder and a decoder. The encoder learns compressed representations of input data, while the decoder reconstructs the data, enabling the detection of anomalies when reconstruction errors exceed a certain threshold. It will be appreciated that various other machine learning models may be used, such as for example other deep learning models, support vector machines, etc.

In some examples, the preprocessed operational data is transformed into feature vectors by the feature extraction module. These feature vectors represent key characteristics of the operational state of the substation and are input into the fine-tuned machine learning model or analysis.

A fault detection and output unit 13 is provided. Upon processing the feature vectors, the fine-tuned machine learning model 11 determines whether the operational state is normal or indicative of faults. The fault detection and output unit 13 may manage the results by outputting an indication of a fault when feature vectors are classified as faulty; generating alerts or diagnostic data that can be communicated to remote supervisory control systems responsible for maintenance scheduling; and/or updating the model incrementally as additional labeled or unlabeled district heating data becomes available, thereby improving detection accuracy over time.

The mechanical fault signature data used for pre-training includes time-series sensor measurements capturing behaviors of mechanical systems experiencing faults. In some examples, this data encompasses vibration data from accelerometers or vibration sensors installed on rotating or moving parts, such as mechanical bearings. It may exhibit dynamic changes indicative of emerging faults, providing a rich source of fault patterns for the machine learning model 11 to learn from.

In some examples, an optional communications interface 15 is provided, that can facilitate data transfer between various components. It may for example enable sensor data transmission from the sensors of the sensor and data acquisition unit 7 to the data processing and preprocessing unit 9; model updates and parameter configurations between the machine learning model 11 and/or external databases; and/or send identified faults and alerts to remote supervisory control systems and/or maintenance personnel.

In operation, the system 1 may continuously monitor the one or more substations and/or associated downstream heating/cooling systems for operational irregularities. The sensors capture real-time data, which is preprocessed and transformed into feature vectors. The fine-tuned machine learning model analyzes these vectors to detect anomalies indicative of faults. When a fault is detected, an alert is generated, allowing for timely maintenance and minimizing potential downtime or inefficiencies in the thermal energy exchange process.

The integration of machine learning techniques with domain-specific fine-tuning enables the system to detect faults with high accuracy, even when fault data is scarce. By leveraging mechanical fault signature data from related domains, the system overcomes data limitations commonly found in district heating fault detection. The preprocessing steps enhance the sensitivity of the model to fault-like variability, ensuring robust performance across varying operating conditions.

In some examples, an unsupervised neural network model is trained on mechanical fault signature data from related domains (e.g., bearing vibration data). The autoencoder learns to compress and reconstruct data, identifying patterns associated with normal operations. By means of a fine-tuning module, the pre-trained model can be adjusted using district heating substation fault-indicative data to capture domain-specific characteristics. The model training may employ supervised or semi-supervised learning techniques with labeled datasets (normal vs. faulty states) to enhance model accuracy. An inference engine may be used that applies the fine-tuned model to incoming feature vectors in real-time, classifying operational states as normal or faulty.

In some examples, a mechanical fault signature data repository 10 is provided that the system can access. The mechanical fault signature data repository can provide important training data for the machine learning model. For example it may include time-series sensor data that has historical datasets capturing mechanical behaviors, particularly from systems experiencing faults, such as vibrations, oscillations, or pressure fluctuations; vibration data that includes (high-resolution) data from accelerometers or vibration sensors installed on rotating machinery, provided in both time and frequency domains; and/or fault type annotations including data labeled with specific fault conditions (e.g., bearing wear, misalignment) to facilitate supervised learning. This repository 10 can be used for pre-training the model.

By preprocessing the data to increase fault-like variability and fine-tuning a pre-trained model with domain-specific data, the method improves the accuracy of fault detection in district heating substations. The use of a pre-trained model facilitates the transfer of knowledge from one domain (e.g., mechanical bearing faults) to another (district heating), enabling rapid model development and deployment. High-frequency data acquisition and incremental model updating allow the method to scale with the size of the district heating network and effectively adapt to new operational conditions.

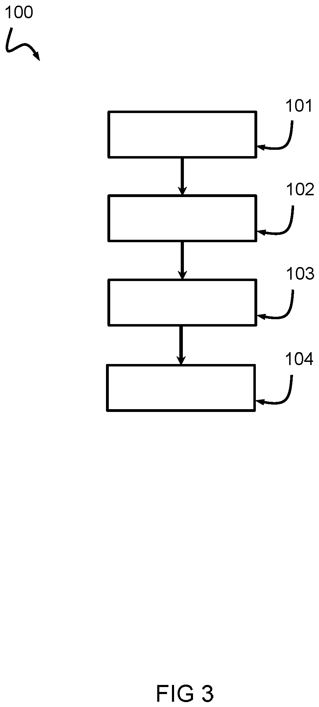

Fig. 3 shows a schematic diagram of an exemplary a computer-implemented method 100 of training a machine learning model for detecting operational irregularities in a thermal energy exchange system. In a first step 101, mechanical fault signature data indicative of fault conditions in mechanical systems is obtained, wherein the mechanical fault signature data comprise time-series sensor measurements capturing fault-related behaviors. In a second step 102, a machine learning model is pre-trained on the mechanical fault signature data, wherein feature representations associated with mechanical fault patterns are learned. In a third step 103, district heating substation fault-indicative data corresponding to one or more district heating substations in a thermal energy exchange system is obtained, wherein each district heating substation is configured to facilitate thermal energy exchange between a first side, where heating or cooling is generated, and a second side, where heating or cooling is consumed. In a fourth step 104, the machine learning model is fine-tuned on the district heating substation fault-indicative data, wherein the model's learned representations to operational characteristics of the thermal energy exchange system are adapted. The fine-tuned machine learning model can e.g. be used to detect whether district heating substations are faulty or operating normally based on sensor data.

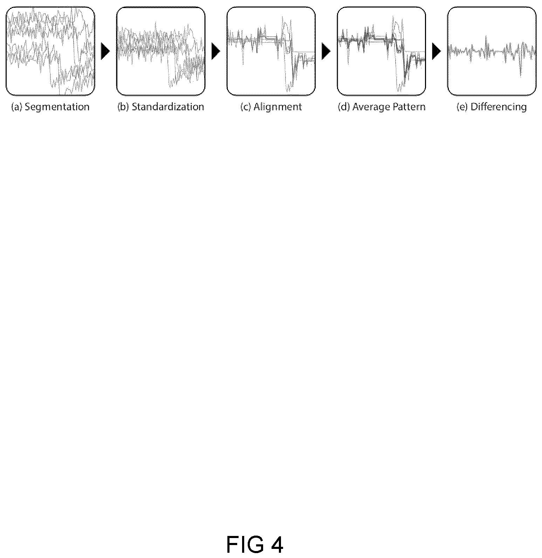

Fig. 4 shows a schematic illustration of data processing steps. These exemplary data processing steps can effectively improve the detection of faults in DH substations. Fault signatures can be seen as time patterns (e.g. daily patterns) that represent normal or faulty operations in a DH system. These signatures are critical because they form the basis for identifying whether a fault has occurred.

In some examples, the process for fault signatures may include the following steps:
(a) The collected substation data is divided into segments, such as daily periods, to capture typical system behavior over time.
(b) The segmented data is standardized (using a method called z-score normalization) to ensure all measurements are on a similar scale, making it easier to compare patterns across different scenarios. This narrows the signature down to "behavior" from time step to time step, compared to other daily signatures, instead of their absolute values/magnitude.
(c) To align the daily data patterns, a method called Dynamic Time Warping is used. This technique ensures that the data is properly aligned even if there are time differences in the way faults develop.
(d) Once the data is aligned, an average pattern is created that represents the typical behavior of the substation over a day (based on for instance a week), smoothing out any noise or irregularities (e.g., domestic hot water use). In essence, the pattern shows the repeating behavior of a day over a certain time period.
(e) Finally, the data is processed further to capture important changes over time (called first-order differencing). These refined patterns become the fault signatures.

Based on experiments, it has been identified that faults create unpredictable, erratic patterns (high variance), while normal operations follow a stable, predictable pattern. This insight can be exploited in different ways. It makes it easy to tell the difference between normal and faulty behavior, and it mirrors how faults in mechanical systems, like bearings, are detected, faults cause more vibrations, which show up clearly in the data over time.

Machine learning models can be trained to recognize these patterns and differences. In some experiments, the autoencoder methods performed better. In some examples, the models are first trained using the rich data available from the bearing fault domain. After this initial training, they are fine-tuned using lab-generated data from DH systems. This two-step process ensures that the models can detect faults in DH systems even when there is limited labeled data. The results show that this method can reliably detect faults, even in unpredictable real-world environments.

In certain embodiments, the machine-learning-based fault detection model for identifying operational irregularities in the substation is trained and validated using datasets from multiple sources. In some examples, transfer learning is employed where a model is initially trained on fault data from another domain (and/or using synthetic data) and subsequently fine-tuned with actual district heating measurement data.

In some examples, one or more of the following categories of datasets are employed:
The first exemplary category is a mechanical bearing dataset. In some examples, this dataset may be used as a source domain for transfer learning. This dataset contains time-series vibration data recorded under varying fault conditions (including normal operation and different single-point defects). Due to the abundance of labeled fault data, it provides a solid basis for the model to learn general features of fault-like anomalies, which can be transferred to district heating substation fault detection.

A second exemplary category is laboratory-based thermal energy exchange system dataset. This dataset may be collected from a laboratory setup designed to emulate the operational behavior of a district heating substation. In this setup, a heat exchanger, controllable valve, and external controller replicate realistic heat consumption patterns on the secondary side. Fault scenarios include, for instance, minor valve leaks, more pronounced valve leaks, stuck valves, high heat-curve setpoints, and deviating sensor measurements. These scenarios are introduced under consistent demand and environmental conditions, ensuring that any deviations in measured parameters reflect actual fault conditions. Sensor measurements (including temperature, flow rate, and pressure) are acquired at defined intervals, capturing the transition from normal operation to various fault states. This lab-based dataset enables the model to learn and validate fault detection strategies under controlled, repeatable conditions.

A third exemplary category is a real-world district heating substation dataset. In some examples, e.g. in addition to controlled lab data, an example real-world dataset is collected from multiple substations in an operational district heating network. Sensor readings (such as supply temperature, return temperature, flow rates, etc,) are recorded at periodic intervals. Certain fault types, such as high heat-curve setpoints, incorrect sensor placements, oversized control valves, or secondary-side leakages, may be (partially) labeled, enabling further fine-tuning of the model. Not all substations exhibit every fault, resulting in variable distribution of labeled scenarios across the network. Nonetheless, this real-world dataset can provide valuable insight into practical, day-to-day operational behavior, further improving the fault detection model's robustness.

Across these datasets, supply temperatures, return temperatures, and the derived temperature difference are primary indicators of substation performance. Patterns in can reveal inefficiencies or component-level issues, while temperature differences can highlight the effectiveness of the thermal exchange process. Depending on the data source, measurements may be taken at intervals ranging from seconds to several minutes. Where appropriate, resampling or aggregation methods are employed to ensure consistency across different sampling rates.

The resulting data may include both normal operational segments and a variety of artificially induced and/or naturally occurring fault scenarios (e.g., leaks, stuck valves, sensor anomalies, or inappropriate control strategies). Because labeled fault data from real-world substations can be limited, in some exemplary embodiments, transfer learning is used to address data scarcity. First, the model learns general fault patterns from the mechanical bearing dataset, which exhibits similar high-variance, fault-like signatures. Next, the model is fine-tuned using both the lab-based thermal energy exchange system dataset and the partially labeled real-world substation dataset. This two-step training process enhances the model's ability to accurately identify faults in district heating substations, even when labeled data is sparse.

The collected data, encompassing temperature differentials, flow rates, and other sensor-derived parameters, can be segmented into time-based intervals representative of repeating operational behavior. Each interval undergoes optional preprocessing steps, such as normalization and dynamic time warping, to align and emphasize recurring patterns. An aggregate representation is then produced by averaging the aligned segments and, in some examples, applying differencing to accentuate abrupt changes indicative of faults. The aggregated, preprocessed data (referred to as a "fault signature") is fed into one or more machine-learning-based models (e.g., deep learning model such as autoencoders), which distinguish between normal and faulty conditions by detecting deviations from learned baseline patterns. It will be appreciated that other classifiers may also be used, for instance a classifier that gives a score instead of working based on a reconstruction error like e.g. autoencoders.

Through this multi-domain, multi-dataset approach, the fault detection model can achieve robust performance in identifying operational irregularities. It thereby supports proactive maintenance strategies, improving overall reliability and efficiency in district heating or other thermal energy exchange systems.

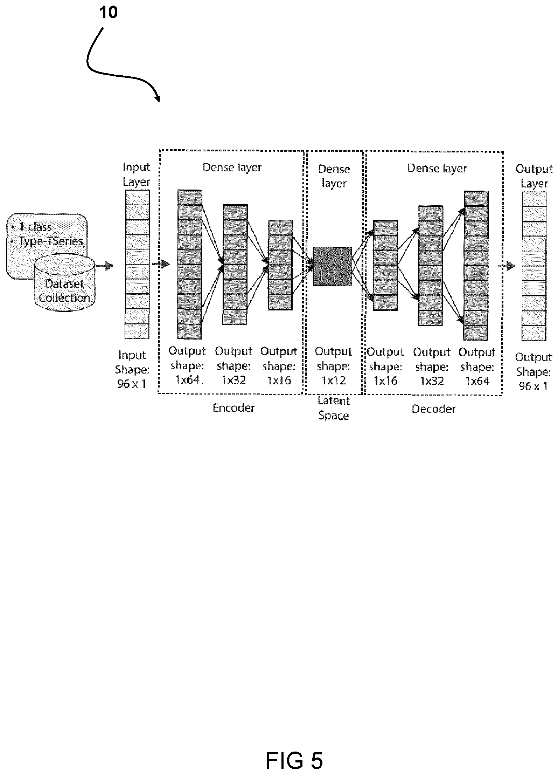

Fig. 5 shows a schematic diagram of an embodiment of an exemplary autoencoder 10 that can be used as machine learning model. In an example, the model 10 is designed to encode and decode the variability in the provided signature of 15-minute time series data for fault detection in DH systems. The model comprises an encoder, bottleneck, and decoder, using fully connected dense layers to capture patterns in the data. The encoder reduces the input dimensionality through three dense layers. At the model's core is a bottleneck layer (latent space), capturing the most salient features of the input data. The decoder mirrors the encoder with dense layers, progressively reconstructing the input data. For district heating substation applications, fully connected layers (dense layers) may be preferred over convolutional layers, because the primary goal is to capture the statistical structure and short-term changes in the "fault signature" rather than localized spatial patterns.

A variational autoencoder (VAE) follows a similar architecture to an autoencoder but introduces a probabilistic latent space. Instead of learning fixed latent variables, the VAE learns a probability distribution with a mean (µ) and a logarithmic variance (log σ^2). This enables the model to sample from a Gaussian distribution during training and inference. The loss function for the VAE combines two components: the reconstruction loss and the Kullback-Leibler divergence. This hybrid loss function ensures that the VAE not only reconstructs the input data accurately but also learns a structured latent space that facilitates anomaly detection and allows the model to improve generalization.

In some examples, repeating daily operational patterns of district heating (DH) substations are captured. The autoencoder is trained to learn a compressed representation of the time-series data and reconstruct this data with minimal error. During normal or expected operation, the reconstruction error is typically low; however, when new operational data deviate from this learned pattern, e.g., due to a fault, the reconstruction error tends to rise. This difference in reconstruction error provides a clear indication of an anomaly.

As an alternative or in addition to autoencoders, a support vector machine such as a one-class support vector machine (OCSVM) may be used to establish a boundary encapsulating learned operational behavior, such as faulty behavior in scenarios where there is more faulty labeled data than normal data. In some examples, the OCSVM may be trained to capture normal behavior, flagging deviations as potential anomalies. Because OCSVMs rely on kernel-based feature mappings, it can be advantageous to perform feature engineering (including the generation of "fault signatures" from district heating measurement data) so that the feature distributions from the source domain (e.g., mechanical bearing data) and the DH system domain are sufficiently aligned. This alignment helps mitigate challenges such as "negative transfer" (i.e., deteriorated model performance if source and target distributions differ significantly).

Because acquiring labeled fault data from district heating systems can be challenging, certain embodiments leverage transfer learning (TL) from a domain where such fault data are more readily available. For instance, mechanical bearing fault datasets are often abundant and exhibit time-series "vibration-like" anomalies resembling those that arise in DH substations experiencing operational irregularities. By initially training models (e.g., OCSVM, AE, or VAE) on the mechanically oriented fault data, the model parameters learn to detect the kind of erratic behaviors characteristic of faults in general. Subsequently, the models are fine-tuned using lab-generated or field-collected DH data representing real or simulated substation faults. This approach adapts the learned representations to the district heating domain, resulting in more accurate fault detection when labeled DH data are limited.

In some examples, a neural-network-based fault detection model (e.g. an AE or VAE) is pre-trained on abundant fault data from a different domain (e.g., mechanical bearing data) and then fine-tuned using the fault signatures derived from the district heating substation's measurement data. For the OCSVM approach, the feature vectors encoding these fault signatures are used to position a decision boundary. During operational use, new fault signatures are generated from incoming data and fed into the trained model. If the incoming signature lies outside the learned boundary (in the OCSVM), or if reconstruction errors (in the AE/VAE) exceed a threshold, the system flags a fault condition.

The obtained time-series measurement data (e.g., supply temperature, return temperature, derived temperature differences, flow rates, pressures) from the one or more district heating substations (or coupled systems downstream) may be segmented into time-based intervals (e.g., daily cycles) and subjected to preprocessing steps (such as normalization or standardization, dynamic time warping alignment, averaging, and differencing) to produce a fault signature that emphasizes short-term changes in substation operation.

Once a fault is detected, the system may trigger alerts, schedule on-site inspections, and/or selectively adjust operational parameters (e.g., valve setpoints, controller gains) to mitigate or preempt further disruption. The model can optionally diagnose a probable fault type, such as stuck valves, sensor errors, or unfavorable control configurations, by analyzing characteristic deviations in the input features or reconstructed signals.

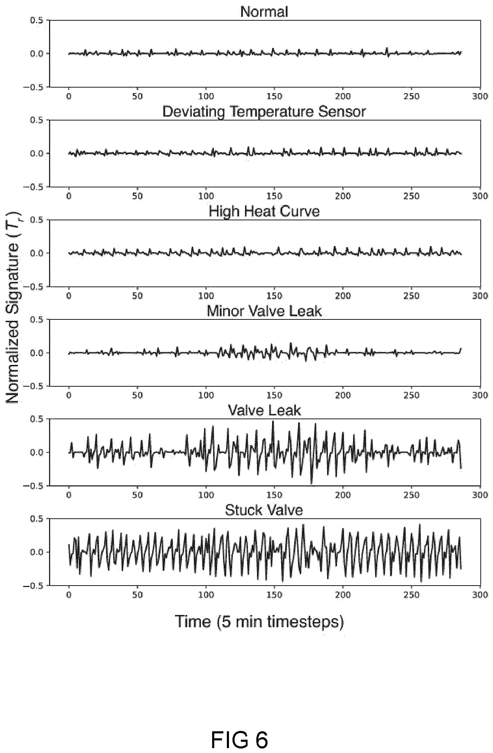

Fig. 6 shows a schematic diagram of an embodiment of graphs. Six time-series plots compare a "Normal" substation signature to five fault conditions, namely "Deviating Temperature Sensor," "High Heat Curve," "Minor Valve Leak," "Valve Leak," and "Stuck Valve." Each plot shows the normalized fault signature (vertical axis) over time in 5-minute steps (horizontal axis). Normal operation remains relatively steady, whereas faulty conditions exhibit increasingly erratic fluctuations.

In some experiments, the method was evaluated using two distinct datasets to assess both its effectiveness under controlled conditions and its applicability in operational district heating environments. A first dataset was generated in a laboratory setting (referred to here as "lab data") and includes known ground-truth information regarding various induced faults. A second dataset comprises real-world time-series measurement data from actual district heating substations, capturing day-to-day operational conditions and potential fault scenarios.

To facilitate both model training and subsequent evaluation, each dataset was partitioned into a training subset and an evaluation subset using an 80%/20% split. This allocation ensures sufficient measurement data for the machine-learning-based fault detection model to learn normal and faulty behavioral patterns, while preserving a separate portion of data for robust performance assessment. In addition, Monte Carlo cross-validation was employed to address the time-dependent nature of the substation measurement data. In this procedure, the data were segmented into discrete daily intervals, with each day treated as an approximately independent operational unit. Because the disclosed method relies on fault signatures that emphasize short-term changes, any residual dependency between consecutive days is considered minimal for purposes of accurately identifying deviations driven by fault conditions.

During evaluation, multiple performance metrics were used to quantify how effectively the fault detection model distinguishes faulty behavior from normal operation, including:
- Accuracy, being the proportion of correctly identified instances (both normal and faulty) out of the total instances evaluated.
- Precision, being the proportion of correctly identified faulty instances among all instances predicted as faulty. A higher precision indicates fewer false alarms.
- Recall (Sensitivity), being the proportion of truly faulty instances that were correctly identified. A higher recall indicates fewer missed faults.
- F1 Score, being the harmonic mean of Precision and Recall, providing a balanced measure of both false positives and false negatives.

By applying these metrics, the performance of the fault detection model can be comprehensively evaluated. In tests involving the lab-generated data, the presence of intentionally induced faults offered a known baseline against which the model's ability to detect and classify abnormal conditions was tested. In the real-world dataset, the model's generalization capability was examined under naturally occurring operational variations, an essential demonstration of its suitability for deployment in district heating substations operating under diverse and unpredictable conditions.

These experiments confirmed the robustness of the proposed fault detection strategy, as short-term variations indicative of faults could be identified consistently across daily intervals. By combining daily segmentation, normalization, and, where appropriate, time-alignment techniques such as dynamic time warping, the model successfully learned characteristic normal behaviors and flagged anomalies with high accuracy and reliability. As a result, the invention enables both improved detection of operational irregularities and more precise guidance for maintenance actions, ultimately enhancing the efficiency and reliability of district heating systems.

In an exemplary set of laboratory tests, time-series measurement data were collected from a district heating substation operating under both normal and deliberately induced faulty conditions. The induced faults included:
- Minor valve leaks (MVL),
- Significant valve leaks (VL),
- Stuck valves (SV),
- Improper control curve settings (e.g., a heat curve set too high, HHC),
- Defective temperature sensors (DTS), and
- Open control valves (OCV).

These exemplary scenarios were chosen to reflect common fault types discussed herein (e.g., valve leaks, stuck valves, faulty sensors, and incorrect control strategies).

In the experiments, daily measurement intervals were extracted to capture the substation's repeating operational patterns. To highlight short-term changes, each day's data were processed by:
- Segmentation into discrete 24-hour windows.
- (Optional) Standardization or normalization to ensure consistent scaling.
- (Optional) Alignment of operational features (e.g., via dynamic time warping), so that temporal shifts did not obscure recurring behaviors.
- First-order differencing, computing the difference between consecutive time steps in each daily interval.

Applying this differencing step yielded daily signatures in which pronounced peaks corresponded to abrupt substation adjustments (e.g., sudden temperature fluctuations), whereas small peaks indicated more stable operation. Figure 4 (referenced here as an example) depicts representative daily signatures for each scenario, illustrating how fault conditions amplify short-term deviations compared to normal operation.

Table 1 below provides an illustrative ranking of the various scenarios based on the variance observed in both the temperature difference (ΔT) signature (i.e., supply temperature minus return temperature) and the return temperature (Tr) signature, over two consecutive weeks. Lower variance indicates greater stability:

The results indicated that the normal operation scenario consistently exhibits the lowest variance in both ΔT and Tr. By contrast, faults that disrupt or force primary flow regardless of actual demand (e.g., stuck valves or valve leaks) yield significantly higher variability, reflecting unstable heat exchange and erratic system adjustments. Improper control settings (HHC) and defective sensors (DTS) also elevate short-term fluctuations, albeit to a lesser extent than severe valve faults.

To validate the statistical significance of these differences, a Fligner-Killeen test (a non-parametric method for assessing homogeneity of variances) was applied. In nearly all cases, p-values fell well below a 0.05 threshold, confirming that fault-induced variability differs significantly from normal operation:
Although minor deviations (e.g., minor valve leaks, MVL) may not always register as dramatically as stuck valves (SV), even these lower-level faults produce noticeable shifts in substation behavior relative to the stable baseline of normal operation.

Overall, it is clear that the method of the disclosure improves identifying and quantifying fault-induced instabilities.

In fig. 6, the following graphs are given:
- Normal Operation. The data exhibits low variance and subtle daily peaks, indicating consistent, stable thermal exchange.
- Minor Valve Leak (MVL). Causes relatively small but detectable increases in variance; the system compensates with minor adjustments to maintain steady operation.

Significant Valve Leak (VL). Allows unintended primary flow when there is little or no secondary demand, leading to frequent and larger thermal fluctuations.

Stuck Valve (SV). Constitutes a severe fault in which the control valve is constantly open, forcing flow on the primary side regardless of demand, thereby causing sharp, erratic variations and the highest variance readings.

Improper Control Settings (HHC). Increases the heat curve setting excessively, prompting the substation to deliver more heat than necessary, producing rapid or oversized adjustments and consequently higher variance.

Defective Temperature Sensor (DTS). Causes incorrect temperature readings on the secondary side, driving the system to over- or under-compensate. These erroneous adjustments manifest as instability, reflected by elevated short-term peaks.

These empirical observations reinforce that faults, particularly those directly impacting flow regulation (stuck or leaking valves), lead to amplified variance in the daily ΔT and Tr signatures. Consequently, monitoring and analyzing short-term deviations in these parameters facilitates robust detection of operational irregularities, supporting proactive fault identification and more reliable district heating system performance.

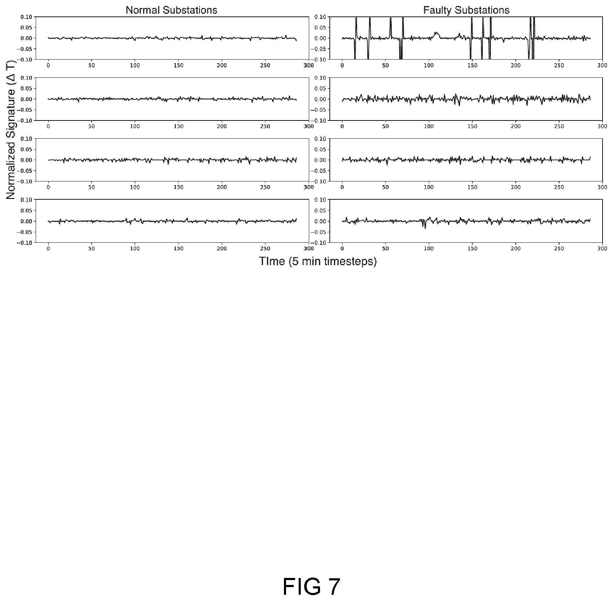

Fig. 7 shows a schematic diagram of an embodiment of graphs. The shown time-series plots compare normalized ΔT signatures for normal substations (left column) and faulty substations (right column). The x-axis (0-300) represents time in 5-minute increments, while the y-axis shows the normalized temperature-difference signal. Normal traces remain relatively steady, whereas faulty traces exhibit larger, erratic fluctuations.

In an example, real-world operational data from multiple district heating (DH) substations was obtained to assess the applicability of the fault detection method described herein. As discussed elsewhere in this description, the measurement data may include supply and return temperatures, as well as derived parameters such as the temperature difference (ΔT= Ts - Tr). Each substation was labeled "normal" or "faulty" based on engineering assessments and/or operational records.

In one instance, fault conditions were introduced by different types of irregular operational behavior, for example:
- HHC (High Heat Curve). This can be a control setting causing an excessively high supply temperature relative to demand.
- WSP (Wrong Set Point). This can be an incorrectly configured set point for the heating curve or supply control, causing deviations in normal operation.
- OCV (Overriding Control Valve). This can be a valve behavior overriding the normal control strategy (e.g., stuck or partially open/closed).
- LSL (Leak/Severe Loss). This can be leaks, stuck valves, or improperly sealed components leading to unintended heat losses or abnormal flow characteristics.

In real-world data, ΔT proved effective in distinguishing normal from faulty scenarios, although distinctions were sometimes more subtle than in controlled (laboratory) conditions. Visual inspection showed that normal operation generally exhibited more stable ΔT patterns, whereas faulty behavior introduced irregular fluctuations. However, because real-world measurements can contain noise or overlapping signatures (e.g., routine daily variations), relying solely on direct human interpretation can be error-prone.

To underscore these observations quantitatively, statistical significance tests were conducted comparing the distributions of ΔT (and, in some examples, return temperature Tr) under normal versus faulty states. One test involved ranking substation data over time based on the stability (or variance) of each measured signature. Substations labeled "faulty" tended to show lower stability rankings in ΔT, distinguishing them from normal scenarios. In some instances (e.g., certain LSL conditions), the impact on the Tr parameter alone was less pronounced, indicating that the temperature-difference-based signatures (ΔT) could offer a more robust indicator of faults for certain types of irregularities.

Overall, these findings highlight that, even under real operating conditions, generating and analyzing ΔT-based fault signatures provides a reliable means of detecting irregularities across various fault scenarios. Machine-learning-based models can further enhance detection accuracy by recognizing subtle, otherwise undetectable patterns in these time-series data.

For testing purposes, various machine-learning-based fault detection models (for instance, one-class support vector machines (OCSVM), autoencoders (AE), and variational autoencoders (VAE)) were trained and tested on both controlled "laboratory" data and real-world substation data. The laboratory data typically contain less noise and more clearly differentiated fault conditions, enabling near-perfect classification in some cases.

When transitioning to real-world substation data, the inherent noise and overlapping patterns increased the difficulty of classification. Nonetheless, the ΔT signature showed robust performance, particularly when used in combination with autoencoder or variational autoencoder models. In one example, an AE-based fault detection model achieved an F1 score of approximately 91% on real-world data, and a VAE-based model achieved approximately 89%. These high scores demonstrate the ability of machine-learning-based techniques to adapt beyond controlled conditions and accurately identify operational irregularities in complex, real-world DH systems.

In some embodiments, an OCSVM-based model demonstrated strong performance on controlled data but experienced a more pronounced decrease in performance when exposed to the broader variability of real-world datasets. This behavior underscores the advantage of models (e.g., AEs, VAEs) that learn richer latent representations and can better generalize to noisy conditions.

The evaluations confirmed that ΔT (i.e., supply temperature minus return temperature) is often a more robust signature than return temperature (Tr) alone. While certain faults may only slightly alter Tr, most faults consistently disrupt ΔT. Laboratory and real-world results revealed that ΔT frequently exhibits characteristic fluctuations analogous to "vibration-like" patterns found in other fault domains (e.g., mechanical systems such as faulty bearings). This similarity reinforces the transfer-learning strategy disclosed herein, wherein a model can be pre-trained on abundant data from other domains with periodic or vibration-based signatures and subsequently fine-tuned on DH-specific data.

For instance, models initially trained on vibration data from mechanical bearing faults can capture the notion of "unstable" or "erratic" behavior. By fine-tuning with ΔT-based DH fault signatures (collected under known or semi-labeled conditions), the same model can successfully detect diverse substation faults. Empirical results demonstrated that such transfer learning enables high fault detection accuracy, even when the labeled DH dataset is limited.

In evaluations, classification performance was summarized using confusion matrices or contingency tables representing the true positives (TP), false negatives (FN), true negatives (TN), and false positives (FP) for each fault class. Controlled (lab-based) evaluations often result in near-perfect recognition of normal operation and most fault conditions, with minor misclassifications in scenarios exhibiting marginal or intermittent deviations. Under real-world conditions, a distinction can be made between normal operation, certain fault types (e.g., HHC, OCV, LSL) and complex faults (e.g., WSP). For normal operation, large percentages of normal data points are correctly identified, indicating high specificity for stable, expected behavior. For certain fault types (e.g., HHC, OCV, LSL), distinctive and persistent ΔT disruptions frequently yield 100% true-positive detection in some trial runs. For complex faults (e.g., WSP), partial overlaps with normal patterns can lead to a modest rate of false negatives, highlighting an area for future refinement or more specialized model training.

Despite real-world noise, the overall high accuracy demonstrates that the disclosed fault detection system and method can reliably differentiate between normal and faulty operational states.

These results confirm that monitoring short-term changes in substation measurements, especially ΔT over time, enables robust detection of operational irregularities. When combined with suitable machine-learning-based fault detection models and optional transfer learning from related domains, the system can offer improved reliability, with early detection of substation faults (valve issues, sensor malfunctions, control errors) to mitigate disruptions. Further, an enhanced energy efficiency can be obtained, by rapid detection and correction of inefficiencies that drive up return temperatures and hinder overall DH performance.

It will be appreciated that in the methods described some steps can be re-ordered, and/or one or more steps may be omitted depending on the specific implementation requirements. It will also be understood that alternative methods may be applied instead of, or in combination with, the described steps.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. A computer implemented method for detecting operational irregularities in a thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface, and wherein the interface is provided by means of at least one substation connected to the first side and the second side, the substation being configured to facilitate thermal energy exchange between the first side and the second side, wherein one or more downstream heating/cooling systems at the second side are coupled to the at least one substation, wherein the method includes:
obtaining, using one or more sensors, operational data indicative of at least one measured parameter of the district heating substation over a plurality of time intervals;
obtaining a machine learning model that has been pre-trained on mechanical fault signature data to extract features characteristic of fault conditions;
fine-tuning the trained machine learning model using fault-indicative data obtained from at least one district heating substation, wherein the fine-tuning is configured to adapt the trained machine learning model to the operating domain of district heating;
applying the fine-tuned machine learning model to one or more feature vectors extracted from the operational data of the district heating substation to determine whether the district heating substation and/or the one or more downstream heating/cooling systems coupled to the district heating substation are in a faulty operational state or a normal operational state; and
outputting an indication of a fault when the one or more feature vectors are classified as faulty by the fine-tuned machine learning model.

2. The computer-implemented method of claim 1, further including preprocessing the operational data of the district heating substation so as to generate one or more fault signatures that increase fault-like variability, said preprocessing comprising at least:
dividing or segmenting the operational data into multiple time-based intervals,
normalizing or standardizing the data within each interval to reduce magnitude disparities,
aligning the time-based data across said intervals to account for timing shifts, and
generating a differenced time-series representation to increase dynamic changes between consecutive time steps; and
wherein the fine-tuned machine learning model is applied to the generated fault signatures to determine whether the district heating substation is in a faulty operational state or a normal operational state, and wherein an indication of a fault is outputted in case said fault signatures are classified as faulty by the fine-tuned machine learning model.

3. The computer-implemented method of claim 1 or 2, wherein the mechanical fault signature data includes time-series sensor measurement data that captures a behavior of mechanical systems experiencing faults.

4. The computer-implemented method of claim 1, 2 or 3, wherein the mechanical fault signature data includes operational measurement data that shows dynamic changes indicative of emerging faults.

5. The computer-implemented method of any one of the preceding claims, wherein the mechanical fault signature data is obtained from a domain exhibiting periodic or vibration-based fault characteristics.

6. The computer-implemented method of any one of the preceding claims, wherein the mechanical fault signature data includes vibration data, wherein the vibrational data includes time-series signals from accelerometers or other vibration sensors installed on rotating or moving parts.

7. The computer-implemented method of any one of the preceding claims, wherein the mechanical fault signature data is mechanical bearing fault data, wherein the mechanical bearing fault data comprise time-series measurements indicative of mechanical vibration or equivalent fault-related variations in mechanical bearings.

8. The method of claim 7, wherein the pre-training is performed using a dataset of bearing vibration signals under multiple bearing fault types.

9. The method of any one of the preceding claims, wherein the pre-trained machine learning model is an autoencoder configured to learn a compressed representation of mechanical fault patterns, and wherein said fine-tuning step updates at least the decoder portion of said model based on district heating substation fault-indicative data, so as to capture heating substation domain-specific fault characteristics.

10. The method of any one of the preceding claims, wherein the daily or periodic segmentation of data is chosen to capture cyclical demand profiles of residential or commercial district heating usage.

11. The method of any one of the preceding claims, wherein a data acquisition interface is provided that is configured to perform sensor measurements at intervals of thirty minutes or less, preferably twenty minutes or less, even more preferably five minutes or less, for obtaining the operational data.

12. The method of any one of the preceding claims, wherein the fault signature used as model input is derived from a primary return temperature of the district heating substation, and/or a temperature differential between a supply temperature and a return temperature.

13. The method of any one of the preceding claims, wherein the processor is configured to update the fine-tuned model incrementally as additional labeled or unlabeled district heating data become available.

14. The method of any one of the preceding claims, further comprising a communications interface operable to send identified faults, alerts, or diagnostic data to a remote supervisory control system responsible for scheduling maintenance in the district heating network.

15. A detection system for detecting operational irregularities in a thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface, and wherein the interface is provided by means of at least one substation connected to the first side and the second side, the substation being configured to facilitate thermal energy exchange between the first side and the second side, wherein one or more downstream heating/cooling systems at the second side are coupled to the at least one substation, the detection system comprising:
one or more sensors configured to obtain operational data indicative of at least one measured parameter of the district heating substation over a plurality of time intervals;
a memory storing:
a trained machine learning model that has been pre-trained on mechanical fault signature data to extract features characteristic of fault conditions;
instructions for fine-tuning the trained machine learning model and classifying operational states of the district heating substation;
one or more processors coupled to the memory and the one or more sensors, the one or more processors being configured to:
fine-tune the trained machine learning model using fault-indicative data obtained from at least one district heating substation, wherein the fine-tuning is configured to adapt the trained machine learning model to the operating domain of district heating;
apply the fine-tuned machine learning model to one or more feature vectors extracted from the operational data obtained by the one or more sensors, in order to determine whether the district heating substation and/or the one or more downstream heating/cooling systems coupled to the district heating substation are in a faulty operational state or a normal operational state; and
output an indication of a fault when the one or more feature vectors are classified as faulty by the fine-tuned machine learning model.
